(19) Europäisches Patentamt / European Patent Office / Office européen des brevets

(11) **EP 2 731 293 A1**

(12) **EUROPEAN PATENT APPLICATION**
published in accordance with Art. 153(4) EPC

(43) Date of publication:
**14.05.2014 Bulletin 2014/20**

(51) Int Cl.:
***H04L 9/06*** *(2006.01)*

(21) Application number: **11864991.2**

(22) Date of filing: **09.05.2011**

(86) International application number:
**PCT/ES2011/070331**

(87) International publication number:
**WO 2012/152956 (15.11.2012 Gazette 2012/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Crypto-Res, S.L.**
**46002 Valencia (ES)**

(72) Inventors:
• **MARTÍNEZ SANCHO, Vicent**
**46002 Valencia (ES)**

• **PÉREZ I GIL, Antoni**
**46001 Valencia (ES)**
• **PONS GRAU, Vicent**
**46021 Valencia (ES)**
• **SOLA PALERM, Enrique**
**46010 Valencia (ES)**

(74) Representative: **Chanza Jordan, Dionisio**
**Plaza Alfonso el Magnanimo, 13**
**46003 Valencia (ES)**

(54) **SHANNON SECURITY DOUBLE SYMMETRICAL CRYPTOGRAM METHOD BY CODING INFORMATION FOR TELEMATIC AND ELECTRONIC TRANSMISSION**

(57) An invention in the field of information society for making data and information inaccessible to unauthorized persons in order to protect the privacy of data and information during electronic transmission using a cryptographic method for reliable, fast and secure encryption widely used in industry (private and public telecommunications sectors, computing, national defense, computer programs, electronic payment transactions and banking operations, cryptography of musical and audiovisual works and digital signatures and certificates) by means of the use of the following technical means in sequential and successive order: 1. an alphanumeric matrix, 2. a numerical remainder base matrix, 3. an equivalence key, 4. an equivalence table, 5. a reduced remainder or template cryptogram, 6. a protocol key, 7. a coding algorithm, 8. a final remainder cryptogram and 9. a decoding algorithm.

EP 2 731 293 A1

**Description**

*Technical Sector*

The invention subject to this patent consists of a symmetric cryptographic procedure in which the clear text is encrypted and decrypted in the final cryptogram, by successively applying two consecutive keys; called an equivalence key and a protocol key, each one of which are already provided in the encryption process of Shannon Security Cryptogram (Perfect Secrecy), and also present besides the other two conditions of Shannon; Confusion and Diffusion. This gives a complete unintelligibility and inscrutability of the transmitted information.

It provides a reliable, fast and secure treatment and transmission of encrypted data or information to a variety of industrial applications within the private and public sectors of telecommunications, information technology, national defense, and particularly within computer or software programs, electronic payments and banking transactions, cryptography, musical and audiovisual works, as well as digital signatures and certificates.

In summary, the company demands and requires an increase in the uses of information through cryptography applications in order to provide information data inaccessibility to unauthorized persons for the purpose privacy protection.

*Prior art*

As always, the transmission of confidential information between two parties, two institutions, two agencies, etc.., is one of the issues that require more effort to resolve a main aspect without which the information is no longer safe: encryption message is to be inscrutable to that in the event that the message is intercepted by a third party that is unable to decipher its contents.

Therefore, this issue is of utmost importance within the financial and business fields as well as in protecting data from government agencies. Currently, there are different languages for each encryption, which is usually grouped into one of these two families; as a *symmetrical system encryption* or an *asymmetric system encryption.* The latter is very safe, but not so impossible to break by brute force procedure through increasingly powerful processors that, in time, just by finding out from the prime numbers whose product has built the cryptogram. It is not easy to find and store very large primes. With regards to the symmetric system encryption, a language continues to be the most reliable algorithm called *DES, Data Encryption Standard,* in its simplest DES algorithmic procedure consists of $2^{56}$ keys, which means that if you have a computer that is capable of performing one million operations per second, it would take over 2200 years to try all the keys. Nevertheless, it is now recommended that the key is 128 bits, which the previous computer needs $10^{24}$ years to exhaust all possibilities.

The encryption system that we present here belongs to the symmetrical category.As you will see it is very easy to manage. Furthermore, its versatility makes it an impregnable including powerful computers much higher than the current computers including without any doubt, future computers. As discussed later, the $10^{24}$ years that the DES requires with 128-bit key, is an interval for all practical infinitesimal purposes compared to the time that the same computer needed to test all possibilities in order to encipher a text with our system, although we partially provide information, namely both the equivalence key and the protocol key that we use for our message encryption.

The current cryptograms' resistance to attack by a stranger is based, firstly, on the fulfillment of the two conditions of Shannon, *Confusion and Diffusion,* and, second, in the achievement of an encryption process that stores the ideal process called *Shannon Security Cryptogram* (Perfect Secrecy). Claude E. SHANNON is considered the father of mathematical cryptography. In his two major works: *A Mathematical Theory of Communication (*SHANNON CE: A Mathematical Theory Communication, The Bell System Technical Journal, Vol. 27, pp. 379-423, 623-656, July, October 1948*) and Communication Theory of Secrecy Systems (*C, E. SHANNON: Communication Theory of Secrecy Systems, The Bell System Technical Journal, Vol. 28-4, pp. 656-715, 1949*)*, he provides a sound theoretical basis for both cryptography an cryptanalysis. All encryption languages devised to date combine the two conditions set by Claude Shannon in cryptographic studies: The *Confusion* trying to hide the relationship between the plaintext and the encrypted text, such as substitutions, and *Dissemination* which dilutes the plaintext redundancy by spreading along the encrypted text using, for example, transpositions. Likewise, all these languages tend to be formulated at *Shannon Security Cryptogram* (Perfect Secrecy), which we discuss here-below.

A Shannon Security Cryptogram (Perfect Secrecy) verifies that the cardinality of the key space is equal to or larger than the cardinality of the message space. This criterion is equivalent to saying that a cryptogram is secure if the amount of information provided in knowing the encryption message on plaintext *entropy* is zero. Or in other words: when knowledge of any encrypted texts corresponding to certain clear texts provides no information on other cryptograms whose plain text we want to find out, we can say that this cryptographic language verifies the status of Shannon Security Cryptogram (Perfect Secrecy). Here, we present the current situation and then compare it to our *Cryptography of Residues.*

If we consider all possible plain texts in a given language, we must conclude that this number is infinite. If we limit ourselves to phrases with literary sense, i.e. intelligible to anyone with sufficient language training, that number is still infinite. Nevertheless, you may order it by associating each phrase with a natural number. This indicates to us that the *cardinality of the space of the messages is Aleph-0.* Given this note, we can find some current cryptograms qualities, both those in the so-called *asymmetric cryptography* and those that are characteristic of *symmetrical cryptography*.

All asymmetric encryption algorithms are based on the work published by Whitfield DIFFIE and Martin HELLMAN: New Directions in Cryptography (IEEE Transactions on Information Theory 22, 1976, p. 644-654*).* Based on all of the following: RSA, Diffie-Hellman, ElGamal, Rabin, DSA, etc.., It is obvious that they not only use the *Shannon Confusion* condition corresponding but they all satisfy the condition of *Shannon Security Cryptogram* (Perfect Secrecy), as the set of prime numbers contains infinite elements. However, there is a problem that causes dangerous practical consequences impacting the security of transmitted message: Because the space key (private and public) is Aleph-0, the space of prime numbers is Aleph-0, *Shannon Security Cryptogram* (Perfect Secrecy) is facing the insurmountable problems that we cannot generate prime numbers by a mathematical expression. Therefore, although we have an infinite number of primes, we only know a finite portion of them. From this set of known primes, always of finite amount, there are few small primes that determine short keys, or if you like weak, easy to break keys. Otherwise, the excessively large ones that make such long keys and the encryption process unmanageable given the slow performance. For example, while symmetric algorithms are considered to secure a key of 128 bits, asymmetric algorithms are recommended for keys of not less than 2048 bits, but this brings these encryptions have an encryption rate of about one thousand times lower than the previous ones. Furthermore, the combination of many powerful computers can before long break asymmetric keys, which are considered long.

Regarding the symmetric cryptography we make the following considerations:

A). First, a large part of the symmetrical encryption algorithms divide the message to be encrypted into blocks of fixed size and applied to each of them a series of confusion, substitutions and diffusion operations, usually by transposition. These algorithms are usually included in the name of block encryptions. Most of these operations interspersed confusion and diffusion through a combination known as encryption product that gives rise to a structure called *Substitution-Permutation Network* (for instance, Manuel José LUCENA LOPEZ: Criptografía y seguridad en computadores, p. Jan. 41, Version 4-0.7.53, 8 March 2009, University of Jaén). Another widely-accepted structure similar to the above is called the Feistel Network (The Feistel Network) used in many algorithms, such as DES, Lucifer, FEAL, CAST, Blowfish, etc. was introduced by Horst Feistel in his Article Cryptography and Computer Privacy (Scientific American, Vol. 228, No. 5, 1973.). However, all block encryptions work with fixed string of n bits to which they are alternately applied in the substitution process called S-boxes (S-boxes) and the permutation in the P-boxes (P-boxes). The fact that the bits used are those associated with the ASCII code or any of its variants, determines that the key space that can be used is always of finite cardinality. *Therefore, any symmetric block encryption results in Shannon Security Cryptograms.* This is the reason why knowledge of the encryption text associated with a clear text results in information that can lead to a breakdown of the system.

B). The algorithm IDEA (*International Data Encryption Algorithm*) is a block encryption designed by XUEJIA LAI and James L. MASSEY of the Federal Polytechnic School in Zurich which was first described in 1991 (X. Lai, J. L. Massey and S. Murphy: Markov ciphers and differential cryptanalysis, Advances in Cryptology - Eurocrypt '91, Springer-Verlag., 1992, pp. 17-38). As with the other block cipher algorithms, IDEA is based on the concepts of Shannon confusion and diffusion. Although there are considerable differences with previous ciphers, such as DES (See, for example, Manuel José LUCENA LOPEZ: Criptografía y seguridad en computadores, p. 150, Version 4-0.7.53, 8 March 2009, University of Jaén) it is a Shannon Security Cryptogram (Perfect Secrecy), and although its key space is very large: $2^{128} \approx 3.4 \times 10^{38}$, it is of finite cardinality.

C). The AES (Advanced Encryption Standard) or Rijndael algorithm, the latter name is an acronym of its two authors (Joan DAEMEN and Vincent RIJMEN: The Design of Rijndael: AES - The Advanced Encryption Standard, Springer-Verlag, 2002), is another block encryption system designed to manage key lengths and block variable both between 128 and 256 bits. The AES have does not a Feistel network structure. Although this encryption conducts several of its internal operations at the byte level, interpreting them as elements of a Galois GF $(2^8)$ field, the AES continues to have associated key space of finite cardinality. Therefore, the AES is not a Shannon Security Cryptogram (Perfect Secrecy).

D). Finally, let's consider Encryptions called Stream Ciphers. The general characteristic of these algorithms is to use "pseudo-random generator to encrypt messages of arbitrary length combining the message with a sequence by an operation or exclusive byte by byte, instead of dividing them into separate blocks to encode" (Manuel José LUCENA LOPEZ: Criptografía y seguridad en computadores, p. 167, Version 4-0.7.53, 8 March 2009, University of Jaén). For the exhibition we are doing here, we are only interested to add that none of these ciphers is a Shannon Security Cryptogram (Perfect Secrecy), because when we used a generator, at best, we have many different sequences as potential initial seed values, which means that the key space is of a lower cardinality and always lower than that of the messages.

The ratio of the most common cryptographic algorithms and protocols is considered as standards, and therefore can be considered as accredited by way of illustration and not limitation as follows:

a. TDEA (Triple Data Encryption Algorithm Triple Data Encryption Algorithm): SP 800-20, SP800-38B and SP 800-67 of the NIST ([NIST, SP800-20], [NIST, SP800-38B], [NIST, SP800-67]).

b. AES (Advanced Data Encryption, Advanced Data Encryption) FIPS 197 and NIST SP800-38B ([NIST FIPS197], [NIST SP800-38B]) and Suite B of the NSA ([NSA, Suite B]).

c. DH or DHKA (Diffie-Hellman Key Agreement, Diffie-Hellman Key Agreement): ANSI X9.42 ([ANSI X9.42]) and PKCS # 3 of the RSA Laboratories ([RSALab, 1993]).

d. MQV (Menezes-Qu-Vanstone Key Agreement, Menezes-Qu-Vanstone Key Agreement): ANSI X9.42 ([ANSI, X9, 42]), ANSI X9.63 ([ANSI, X9.63]) and IEEE 1363 [IEEE, 1363].

e. ECDH (Elliptic Curve Diffie-Hellman, Elliptic Curve Diffie-Hellman): ANSI X9.63 ([ANSI, X9.63]), IEEE1363 ([IEEE, 1363]), IEEE1363a ([IEEE, 1363a]) and Suite B of the NSA ([NSA, Suite B]).

f. ECMQV (Elliptic Curve Menezes-Qu-Vanstone, Elliptic Curve Menezes-Qu-Vanstone): Suite B of the NSA ([NSA, SuiteB1) and SEC 1 of the SECG ([SECG, SEC1]).

g. DSA (Digital Signature Algorithm, Digital Signature Algorithm): ANSI X9.30 ([ANSI, X9.30-1]), FIPS 186-2 ([NIST, FIPS186-2]) and FIPS 186-3 ([NIST, 15 FIPS186-3]).

h. ECDSA (Elliptic Curve Digital Signature Algorithm, Elliptic Curve Digital Signature Algorithm): ANSI X9.62 ([ANSI, X9.62]), FIPS 186-2 ([NIST, FIPS186-2]), SP 800-57A of the NIST ([NIST, SP800-57A]), Suite B of the NSA ([NSA, Suite B]) and SEC 1 of the SECG ([SECG, SEC1]).

i. RSA (RSA Cryptosystem): ANSI X9.44 ([ANSI, X9.44]), FIPS 186-2 ([NIST, FIPS186-2]) and PKCS #1 of the RSA laboratories ([RSALab, 2002]).

j. ECIES (Elliptic Curve Integrated Encryption Scheme, Elliptic Curve Integrated Encryption Scheme): ANSI X9.63 ([ANSI, X9.63]), IEEE1363a ([IEEE, 1363a]) and ISO 18033-2 ([ISOIEC, 18033-2]).

k. SI-IA (Secure Hash Algorithm, Secure Hash Algorithm): FIPS180-1 ([NIST, FIPS180-1]), the Suite B of the NSA ([NSA, Suite B]) and FIPS180-2 ([NIST, FIPS180-2]).

l. HMAC (Hash Message Authentication Code, Hash Message Authentication Code): ANSI X9, 71 ([ANSI, X9.71]) and FIPS 198 ([NIST, FIPS198]).

In Spain, the website of the Certification Body of the Spanish National Cryptologic Center, in 2011, (http://www.oc.ccn.cni.es/ProdCert_es.html) and the Common Criteria portal (http://www.commoncriteriaportal.org/products/); together identify the catalog of algorithms and known cryptographic protocols.

Finally, we can consider Japanese Patent JP2005212788 NEC CORPORATION (2005) on an apparatus and method for encrypting and decrypting, or French patent FR2884995 of VIACCESS (2006) over a secure transmission method with encryption / decryption information. All such alternative methods of encoding information employ only one cryptogram instead of two, as the invention arises making use of two consecutive cryptograms, each of which already is a Shannon Security Cryptogram (Perfect Secrecy).

*Technical problem*

The finality of cryptography lies in maximum inscrutability, or minimizing its vulnerability to the maximum and obtaining a high message security (information or data) to avoid interception by unauthorized parties, outside the receiver and the emitter. This applies to both carriers of information (ex., a CD-ROM, a game console, flash memory drive, a PC) and communication, dissemination and reproduction. The problem that faces all types of encryption is the attack or unwanted interference in communication channel between the sender and receiver of the message, a third agent (pirate) that extracts the plain text when he know the keys that have been used to encypher it. Currently, and for any type of encryption, the simplest method of attack is called *brute force.* This is accomplished by testing every possible key one by one; a process that is done using computers with more and more computing power. The possibility of finding the precise key which has been encrypted with a message decreases with its increasing length. As it has already discussed in the introduction to this exhibition, this circumstance requires to increasingly raise the key size. On the other hand, the cryptanalysis provides theoretical alternatives to break, for example, the sixteen complete rounds of DES with less complexity than a brute force attack. But similar to the *improved Davies attack,* both the *differential cryptanalysis* and the *linear cryptanalysis* require between $2^{40}$ and $^{250}$ of clear known texts to break the full 16 rounds of DES. This requirement determines that any of these theoretical attacks is unfeasible for practical purposes.

*Technical Solution*

One proposed solution is to integrate a dual cryptogram that we herein call *Cryptography of Residues.* Through this, we make use of the operations of *Confusion* and *Diffusion. The* process namely leads to *clear text* or *residue-reducing cryptogram* or *template.* However, *Cryptography of Residues* adds a third step: the *Transformation* of each template residue via a coding algorithm in a sequence of many digits as ordered by the index j of the *protocol key.* This third operation is based on a numerical theorem that we call *Residue Theorem.*

The *Transformation* is the operation that makes the present *Cryptography of Residues* a definitive qualitative exchange with respect to the other current cryptographic languages. In our opinion, the qualitative exchange is comparable to the *Dissemination* accounted for in single presence of Confusion (e.g., in the Caesar cipher). This converts the Cryptogram of Residues, in all probability, into the only symmetrical encryption system that is easily manageable that meets the requirement of the Shannon Security Cryptogram (Perfect Secrecy).

In fact, since Aleph-0 is both the space of the messages and the cardinality associated to the space of elements (groups of residues) comprising the totality of *equivalence tables,* Aleph-0 is also the cardinality associated with the space of protocol keys; the technical concepts are described here-below. Thus, in the cryptogram of residues we have a double Aleph-0 cardinality or a greater one in the key part, while Aleph-0 also corresponds to the space of the messages, thus fulfilling the requirement of the Shannon Security Cryptogram (Perfect Secrecy).

In conclusion, it is the only method for the encryption of messages, data and information that meets the requirement of the Shannon Security Cryptogram (Perfect Secrecy), for double and consecutive entries. Therefore, it achieves an encryption process that is undecipherable by others.

In addition, the invention provides for secure encoding of observed information and can be adapted to security measures as indicated and regulated by Spanish and European regulations for Telecommunications and Information Society, as well as to the standards of the *International Organization for Standardization* (ISO), and the Recommendations of the International Telecommunication Union (ITU), particularly in the Series X regarding the Data networks and open system communication Standards ITU-T X. 272 on data compression and privacy over frame retransmission networks (03/2000 version), ITU-T X.273 and ITU-T X.274 regarding Open Systems Interconnection and Security Protocols (07/1994 version).

*Description of the Figure*

For a better understanding of the general characteristics mentioned hereabove, a drawing is attached to the present patent, set forth as specified here-below:

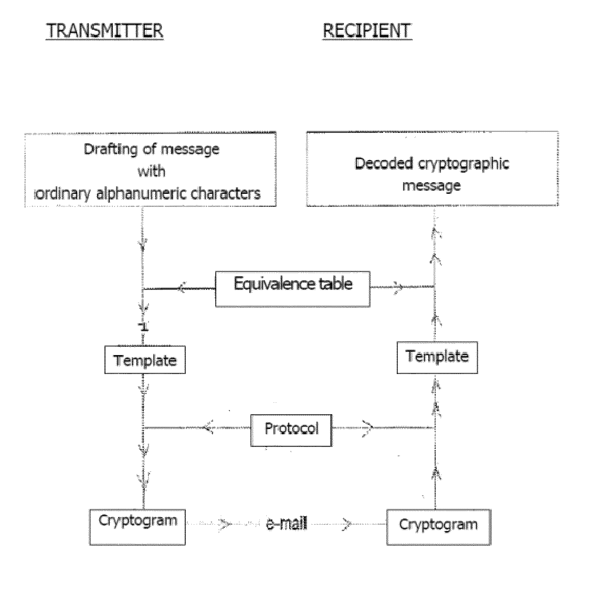

**Figure 1**: Operational flowchart for the transmission of information between two parties through an email with the following stages: The first encoding stage is carried out by the message sender, followed by a second and final encoding phase that allows the addressee or recipient to read the text received via an email, for example.

*Realization mode of the patent*

The following describes the realization of the patent with a breakdown of each of the used means. The technical elements or means used are the following:

1 An alphanumeric matrix
2 A base matrix of numerical residues
3 An equivalences key
4 An equivalences table

*5 A residue-reducing cryptogram or template*
*6. A protocol key*
*7. An encoding algorithm*
*8. A final cryptogram of residues*
*9. A decryption algorithm*

**1. The alphanumeric matrix**

The alphanumeric matrix consists of all the alphanumeric characters that serve to write a clear text or regular text. Characters can be ordered in the form that the user wants. In the case of Table 1, for convenience's sake, we decided to build one 11x11 matrix whose elements are precisely the alphanumeric Latin computer keyboard characters with which we are writing this text.

# Table I. ALPHANUMERIC MATRIX.

## PC-type Keyboard

Naturally, the last column and last row are not part of the matrix. This fringe simply serves to quickly locate the site of a given matrix element occupying it. As can be observed, there are three matrix elements that are shaded: here for this matrix, there are there spaces represented in the keyboard. Also highlighted in the matrix are ten other "white" elements: they can express any other items already located elsewhere, or in their own spacing or it can simply refer to items that take up space in the final cryptogram, that is, as if they do not exist. This capability provides a powerful tool for writing the final cryptogrammic presence of digit sequences that in fact, will only serve to confuse a possible pirate attack, i.e. when a third party tries to decipher it.

**2. The base matrix of numerical residues**

In the following, we shall understand the numerical residue or simply residue of each one of the natural numbers between 1 and 9, inclusively. In this exhibition, the nine residues are generically denoted by the symbol $\Re$ .
Therefore, the base matrix of numerical residue refers to any residue ordination, residue pairs, residue triples, etc. They are all different and arbitrarily but orderly distributed so that each of these remaining residual groups is located in a certain place of distribution. For example, if our base matrix of numerical residue consists of only simple residues, the matrix will comprise a maximum of nine elements: 1, 2, 3, 4, 5, 6, 7, 8, 9. If we build a binary or second order base matrix of numerical residue, that is, whose elements are formed only by groups of residue pairs, then matrices will have a maximum number of elements of $9^2 = 81$. A ternary or third order base matrix of numerical residue will consist of three-residue groups, thus the maximum dimension of these matrices consist of elements of $9^3 = 729$, etc. The $a(i_n, i_{n-1}, i_{n-2},...i_2, i_1)$ elements from an order n matrix of numerical residues are obtained from the following general expression:

$$a\left(i_n, i_{n-1}, \cdots i_2, i_1\right) = 10^{n-1} i_n + 10^{n-2} i_{n-1} + \cdots + 10 i_2 + i_1 \qquad (2.2.1)$$
$$\text{where} \qquad i_j = 1, 2, \cdots, 9; \quad j = 1, 2, \cdots, n$$

where $n$ is the number of residues that are grouped to form each element of the matrix. These items can be ordered as square matrices elements from $n=2$. In this case, we have a 9x9 matrix, giving the expression (2.2.1) the following form:

$$a\left(i_2, i_1\right) = 10 i_2 + i_1 \qquad (2.2.2)$$
$$\text{where} \qquad i_j = 1, 2, \cdots, 9; \quad j = 1, 2$$

If n=3, the matrix will be 27x27, since 93 = 27x27 = 729, in which case the expression (2.2.1) takes the following form:

$$a\left(i_3, i_2, i_1\right) = 10^2 i_3 + 10 i_2 + i_1 \qquad (2.2.3)$$
$$\text{where} \qquad i_j = 1, 2, \cdots, 9; \quad j = 1, 2, 3$$

If $n=4$, the matrix will be of 81 x81, since 94=6561=81 x81, etc.

If in (2.2.2), the index $i_2$ expresses the 9x9 matrix row and the index $i_1$ the column then the binary base matrix of numerical residue presents the ordering depicted in Table 2.

Table 3 shows the ternary *base matrix of numerical residue*. Note that we have ordered its 729 elements by nesting 9 (the 9 values here produce the third subscript $i_3$) from the binary matrix. In the same manner, we order higher-order matrices when we want to use them.

As in the case of the alphanumeric matrix, we also added these matrices comprised of trimmed last column and last row, which only serves to easily observe the place of each pair and each residual triplet through the number of row and column.

**Table 2. Binary base matrix of numerical residues**

| 11 | 12 | 13 | 14 | 15 | 16 | 17 | 18 | 19 | 1 |
|----|----|----|----|----|----|----|----|----|---|
| 21 | 22 | 23 | 24 | 25 | 26 | 27 | 26 | 29 | 2 |
| 31 | 32 | 33 | 34 | 35 | 36 | 37 | 38 | 39 | 3 |
| 41 | 42 | 43 | 44 | 45 | 46 | 47 | 48 | 49 | 4 |
| 51 | 52 | 53 | 54 | 55 | 56 | 57 | 58 | 59 | 5 |
| 61 | 62 | 63 | 64 | 65 | 66 | 67 | 68 | 69 | 6 |
| 71 | 72 | 73 | 74 | 75 | 76 | 77 | 76 | 79 | 7 |
| 81 | 82 | 83 | 84 | 85 | 86 | 87 | 88 | 89 | 8 |
| 91 | 92 | 93 | 94 | 95 | 96 | 97 | 98 | 99 | 9 |
| 1 | 2 | 3 | 4 | 5 | 6 | 7 | 8 | 9 | |

## Tabla.3. of Ternary or third party base matrix numerical residues

| | | | | | | | | | | | | | | | | | | | | | | | | | | | |
|---|---|---|---|---|---|---|---|---|---|---|---|---|---|---|---|---|---|---|---|---|---|---|---|---|---|---|---|
| 111 | 112 | 113 | 114 | 115 | 116 | 117 | 118 | 119 | 211 | 212 | 213 | 214 | 215 | 216 | 217 | 218 | 219 | 311 | 312 | 313 | 314 | 315 | 316 | 317 | 318 | 319 | 1 |
| 121 | 122 | 123 | 124 | 125 | 126 | 127 | 128 | 129 | 221 | 222 | 223 | 224 | 225 | 226 | 227 | 228 | 229 | 321 | 322 | 323 | 324 | 325 | 326 | 327 | 328 | 329 | 2 |
| 131 | 132 | 133 | 134 | 135 | 136 | 137 | 138 | 139 | 231 | 232 | 233 | 234 | 235 | 236 | 237 | 238 | 239 | 331 | 332 | 333 | 334 | 335 | 336 | 337 | 338 | 339 | 3 |
| 141 | 142 | 143 | 144 | 145 | 146 | 147 | 148 | 149 | 241 | 242 | 243 | 244 | 245 | 246 | 247 | 248 | 249 | 341 | 342 | 343 | 344 | 345 | 346 | 347 | 348 | 349 | 4 |
| 151 | 152 | 153 | 154 | 155 | 156 | 157 | 158 | 159 | 251 | 252 | 253 | 254 | 255 | 256 | 257 | 258 | 259 | 351 | 352 | 353 | 354 | 355 | 356 | 357 | 358 | 359 | 5 |
| 161 | 162 | 163 | 164 | 165 | 166 | 167 | 168 | 169 | 261 | 262 | 263 | 264 | 265 | 266 | 267 | 268 | 269 | 361 | 362 | 363 | 364 | 365 | 366 | 367 | 368 | 369 | 6 |
| 171 | 172 | 173 | 174 | 175 | 176 | 177 | 178 | 179 | 271 | 272 | 273 | 274 | 275 | 276 | 277 | 278 | 279 | 371 | 372 | 373 | 374 | 375 | 376 | 377 | 378 | 379 | 7 |
| 181 | 182 | 183 | 184 | 185 | 186 | 187 | 188 | 189 | 281 | 282 | 283 | 284 | 285 | 286 | 287 | 288 | 289 | 381 | 382 | 383 | 384 | 385 | 386 | 387 | 388 | 389 | 8 |
| 191 | 192 | 193 | 194 | 195 | 196 | 197 | 198 | 199 | 291 | 292 | 293 | 294 | 295 | 296 | 297 | 298 | 299 | 391 | 392 | 393 | 394 | 395 | 396 | 397 | 398 | 399 | 9 |
| 411 | 412 | 413 | 414 | 415 | 416 | 417 | 418 | 419 | 511 | 512 | 513 | 514 | 515 | 516 | 517 | 518 | 519 | 611 | 612 | 613 | 614 | 615 | 616 | 617 | 618 | 619 | 10 |
| 421 | 422 | 423 | 424 | 425 | 426 | 427 | 428 | 429 | 521 | 522 | 523 | 524 | 525 | 526 | 527 | 528 | 529 | 621 | 622 | 623 | 624 | 625 | 626 | 627 | 628 | 629 | 11 |
| 431 | 432 | 433 | 434 | 435 | 436 | 437 | 438 | 439 | 531 | 532 | 533 | 534 | 535 | 536 | 537 | 538 | 539 | 631 | 632 | 633 | 634 | 635 | 636 | 637 | 638 | 639 | 12 |
| 441 | 442 | 443 | 444 | 445 | 446 | 447 | 448 | 449 | 541 | 542 | 543 | 544 | 545 | 546 | 547 | 548 | 549 | 641 | 642 | 643 | 644 | 645 | 646 | 647 | 648 | 649 | 13 |
| 451 | 452 | 453 | 454 | 455 | 456 | 457 | 458 | 459 | 551 | 552 | 553 | 554 | 555 | 556 | 557 | 558 | 559 | 651 | 652 | 653 | 654 | 655 | 656 | 657 | 658 | 659 | 14 |
| 461 | 462 | 463 | 464 | 465 | 466 | 467 | 468 | 469 | 561 | 562 | 563 | 564 | 565 | 566 | 567 | 568 | 569 | 661 | 662 | 663 | 664 | 665 | 666 | 667 | 668 | 669 | 15 |
| 471 | 472 | 473 | 474 | 475 | 476 | 477 | 478 | 479 | 571 | 572 | 573 | 574 | 575 | 576 | 577 | 578 | 579 | 671 | 672 | 673 | 674 | 675 | 676 | 677 | 678 | 679 | 16 |
| 481 | 482 | 483 | 484 | 485 | 486 | 487 | 488 | 489 | 581 | 582 | 583 | 584 | 585 | 586 | 587 | 588 | 589 | 681 | 682 | 683 | 684 | 685 | 686 | 687 | 688 | 689 | 17 |
| 491 | 492 | 493 | 494 | 495 | 496 | 497 | 498 | 499 | 591 | 592 | 593 | 594 | 595 | 596 | 597 | 598 | 599 | 691 | 692 | 693 | 694 | 695 | 696 | 697 | 698 | 699 | 18 |
| 711 | 712 | 713 | 714 | 715 | 716 | 717 | 718 | 719 | 811 | 812 | 813 | 814 | 815 | 816 | 817 | 818 | 819 | 911 | 912 | 913 | 914 | 915 | 916 | 917 | 918 | 919 | 19 |
| 721 | 722 | 723 | 724 | 725 | 726 | 727 | 728 | 729 | 821 | 822 | 823 | 824 | 825 | 826 | 827 | 828 | 829 | 921 | 922 | 923 | 924 | 925 | 926 | 927 | 928 | 929 | 20 |
| 731 | 732 | 733 | 734 | 735 | 736 | 737 | 738 | 739 | 831 | 832 | 833 | 834 | 835 | 836 | 837 | 838 | 839 | 931 | 932 | 933 | 934 | 935 | 936 | 937 | 938 | 939 | 21 |
| 741 | 742 | 743 | 744 | 745 | 746 | 747 | 748 | 749 | 841 | 842 | 843 | 844 | 845 | 846 | 847 | 848 | 849 | 941 | 942 | 943 | 944 | 945 | 946 | 947 | 948 | 949 | 22 |
| 751 | 752 | 753 | 754 | 755 | 756 | 757 | 758 | 759 | 851 | 852 | 853 | 854 | 855 | 856 | 857 | 858 | 859 | 951 | 952 | 953 | 954 | 955 | 956 | 957 | 958 | 959 | 23 |
| 761 | 762 | 763 | 764 | 765 | 766 | 767 | 768 | 769 | 861 | 862 | 863 | 864 | 865 | 866 | 867 | 868 | 869 | 961 | 962 | 963 | 964 | 965 | 966 | 967 | 968 | 969 | 24 |
| 771 | 772 | 773 | 774 | 775 | 776 | 777 | 778 | 779 | 871 | 872 | 873 | 874 | 875 | 876 | 877 | 878 | 879 | 971 | 972 | 973 | 974 | 975 | 976 | 977 | 978 | 979 | 25 |
| 781 | 782 | 783 | 784 | 785 | 786 | 787 | 788 | 789 | 881 | 882 | 883 | 884 | 885 | 886 | 887 | 888 | 889 | 981 | 982 | 983 | 984 | 985 | 986 | 987 | 988 | 989 | 26 |
| 791 | 792 | 793 | 794 | 795 | 796 | 797 | 798 | 799 | 891 | 892 | 893 | 894 | 895 | 896 | 897 | 898 | 899 | 991 | 992 | 993 | 994 | 995 | 996 | 997 | 998 | 999 | 27 |
| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | |

### 3. Equivalences key

After selecting a specific base *matrix of numerical residue,* we introduce the equivalences key. This will appear on the *base matrix of numerical residue and transform it into another rearranged base matrix of numerical residue,* i.e. a new matrix in which some or all of its groups of residue exchange their place.

Since the base matrix of numerical residue will be a *mxn* dimension matrix (m rows and n columns), we prefer to order items such as square matrix; as we demonstrate, the equivalence key will consist of the introduction of two sets of numbers between *1* and *m* first, and between *1* and *n* second. In this exhibition, each number of both sets shall be separated by a comma from its neighboring ones and both sets shall be separated by a hyphen (-).

Below, we will describe how equivalence keys appear, and to this end and to gain better understanding, we will assume that we have chosen the base *matrix of ternary or third party numerical residues* from Table 3. Because this is a 27x27 square matrix, in this case m = n = 27. Suppose we choose the equivalences key 3, 27, 18, 9, 5, 21 - 7, 1, 9, 3. For this key, locations permutation program will perform as follows: permute row 3 by the 27th, then permute rows 18 and 9 to be followed by the permutation of rows 5 and 21. In other words, the row permutation operation is realized by identifying each key number in odd position with the row numerically designated for that number, by permuting this row's position with the row that designate the following key number in even position, and so on and so forth, until the even number of numeric pairs is introduced in the whole left key hyphen. On the latter ordination, the right part of the hyphen appears right now in the equivalence key that we have chosen. In this case, there is a permutation between columns 7 and 1, as well as columns 9 and 3.

In the event that one or both previous sequences of the equivalence key feature an odd quantity of numbers, the last of these would be superfluous, since it exchanged its place (row or column). The distribution obtained as a result of this process is the reordered ternary or third party *base matrix of numerical residues.*

By way of example and to better follow further explanations, Table.4 demonstrates a rearranged ternary *base matrix of numerical residue,* obtained with a determined equivalence key from the ternary *base matrix of numerical residue* shown in Table 3. In the matrix illustrated in Table 4, we have shadowed 4 minor matrices 11X11, which are part of the total such that they have no element in common. We have done this in order to help the reader better understand the arguments that we will subsequently discuss

## Tabla.4. Rearranged ternary base matrix of numerical residues

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | |
|---|---|---|---|---|---|---|---|---|---|---|---|---|---|---|---|---|---|---|---|---|---|---|---|---|---|---|---|
| 128 | 112 | 113 | 114 | 115 | 116 | 117 | 118 | 119 | 121 | 122 | 123 | 124 | 125 | 126 | 127 | 111 | 129 | 131 | 132 | 133 | 134 | 135 | 136 | 137 | 138 | 139 | 1 |
| 158 | 142 | 143 | 144 | 145 | 146 | 147 | 148 | 149 | 151 | 152 | 153 | 154 | 155 | 156 | 157 | 141 | 159 | 161 | 162 | 163 | 164 | 165 | 166 | 167 | 168 | 169 | 2 |
| 188 | 172 | 173 | 174 | 175 | 176 | 177 | 178 | 179 | 181 | 182 | 183 | 184 | 185 | 186 | 187 | 171 | 189 | 191 | 192 | 193 | 194 | 195 | 196 | 197 | 198 | 199 | 3 |
| 228 | 212 | 213 | 214 | 215 | 216 | 217 | 218 | 219 | 221 | 222 | 223 | 224 | 225 | 226 | 227 | 211 | 229 | 231 | 232 | 233 | 234 | 235 | 236 | 237 | 238 | 239 | 4 |
| 258 | 242 | 243 | 244 | 245 | 246 | 247 | 248 | 249 | 251 | 252 | 253 | 254 | 255 | 256 | 257 | 241 | 259 | 261 | 262 | 263 | 264 | 265 | 266 | 267 | 268 | 269 | 5 |
| 288 | 272 | 273 | 274 | 275 | 276 | 277 | 278 | 279 | 281 | 282 | 283 | 284 | 285 | 286 | 287 | 271 | 289 | 291 | 292 | 293 | 294 | 295 | 296 | 297 | 298 | 299 | 6 |
| 328 | 312 | 313 | 314 | 315 | 316 | 317 | 318 | 319 | 321 | 322 | 323 | 324 | 325 | 326 | 327 | 311 | 329 | 331 | 332 | 333 | 334 | 335 | 336 | 337 | 338 | 339 | 7 |
| 358 | 342 | 343 | 344 | 345 | 346 | 347 | 348 | 349 | 351 | 352 | 353 | 354 | 355 | 356 | 357 | 341 | 359 | 361 | 362 | 363 | 364 | 365 | 366 | 367 | 368 | 369 | 8 |
| 388 | 372 | 373 | 374 | 375 | 376 | 377 | 378 | 379 | 381 | 382 | 383 | 384 | 385 | 386 | 387 | 371 | 389 | 391 | 392 | 393 | 394 | 395 | 396 | 397 | 398 | 399 | 9 |
| 988 | 972 | 973 | 974 | 975 | 976 | 977 | 978 | 979 | 981 | 982 | 983 | 984 | 985 | 986 | 987 | 971 | 989 | 991 | 992 | 993 | 994 | 995 | 996 | 997 | 998 | 999 | 10 |
| 458 | 442 | 443 | 444 | 445 | 446 | 447 | 448 | 449 | 451 | 452 | 453 | 454 | 455 | 456 | 457 | 441 | 459 | 461 | 462 | 463 | 464 | 465 | 466 | 467 | 468 | 469 | 11 |
| 488 | 472 | 473 | 474 | 475 | 476 | 477 | 478 | 479 | 481 | 482 | 483 | 484 | 485 | 486 | 487 | 471 | 489 | 491 | 492 | 493 | 494 | 495 | 496 | 497 | 498 | 499 | 12 |
| 528 | 512 | 513 | 514 | 515 | 516 | 517 | 518 | 519 | 521 | 522 | 523 | 524 | 525 | 526 | 527 | 511 | 529 | 531 | 532 | 533 | 534 | 535 | 536 | 537 | 538 | 539 | 13 |
| 558 | 542 | 543 | 544 | 545 | 546 | 547 | 548 | 549 | 551 | 552 | 553 | 554 | 555 | 556 | 557 | 541 | 559 | 561 | 562 | 563 | 564 | 565 | 566 | 567 | 568 | 569 | 14 |
| 588 | 572 | 573 | 574 | 575 | 576 | 577 | 578 | 579 | 581 | 582 | 583 | 584 | 585 | 586 | 587 | 571 | 589 | 591 | 592 | 593 | 594 | 595 | 596 | 597 | 598 | 599 | 15 |
| 628 | 612 | 613 | 614 | 615 | 616 | 617 | 618 | 619 | 621 | 622 | 623 | 624 | 625 | 626 | 627 | 611 | 629 | 631 | 632 | 633 | 634 | 635 | 636 | 637 | 638 | 639 | 16 |
| 658 | 642 | 643 | 644 | 645 | 646 | 647 | 648 | 649 | 651 | 652 | 653 | 654 | 655 | 656 | 657 | 641 | 659 | 661 | 662 | 663 | 664 | 665 | 666 | 667 | 668 | 669 | 17 |
| 688 | 672 | 673 | 674 | 675 | 676 | 677 | 678 | 679 | 681 | 682 | 683 | 684 | 685 | 686 | 687 | 671 | 689 | 691 | 692 | 693 | 694 | 695 | 696 | 697 | 698 | 699 | 18 |
| 728 | 712 | 713 | 714 | 715 | 716 | 717 | 718 | 719 | 721 | 722 | 723 | 724 | 725 | 726 | 727 | 711 | 729 | 731 | 732 | 733 | 734 | 735 | 736 | 737 | 738 | 739 | 19 |
| 758 | 742 | 743 | 744 | 745 | 746 | 747 | 748 | 749 | 751 | 752 | 753 | 754 | 755 | 756 | 757 | 741 | 759 | 761 | 762 | 763 | 764 | 765 | 766 | 767 | 768 | 769 | 20 |
| 788 | 772 | 773 | 774 | 775 | 776 | 777 | 778 | 779 | 781 | 782 | 783 | 784 | 785 | 786 | 787 | 771 | 789 | 791 | 792 | 793 | 794 | 795 | 796 | 797 | 798 | 799 | 21 |
| 828 | 812 | 813 | 814 | 815 | 816 | 817 | 818 | 819 | 821 | 822 | 823 | 824 | 825 | 826 | 827 | 811 | 829 | 831 | 832 | 833 | 834 | 835 | 836 | 837 | 838 | 839 | 22 |
| 858 | 842 | 843 | 844 | 845 | 846 | 847 | 848 | 849 | 851 | 852 | 853 | 854 | 855 | 856 | 857 | 841 | 859 | 861 | 862 | 863 | 864 | 865 | 866 | 867 | 868 | 869 | 23 |
| 888 | 872 | 873 | 874 | 875 | 876 | 877 | 878 | 879 | 881 | 882 | 883 | 884 | 885 | 886 | 887 | 871 | 889 | 891 | 892 | 893 | 894 | 895 | 896 | 897 | 898 | 899 | 24 |
| 928 | 912 | 913 | 914 | 915 | 916 | 917 | 918 | 919 | 921 | 922 | 923 | 924 | 925 | 926 | 927 | 911 | 929 | 931 | 932 | 933 | 934 | 935 | 936 | 937 | 938 | 939 | 25 |
| 958 | 942 | 943 | 944 | 945 | 946 | 947 | 948 | 949 | 951 | 952 | 953 | 954 | 955 | 956 | 957 | 941 | 959 | 961 | 962 | 963 | 964 | 965 | 966 | 967 | 968 | 969 | 26 |
| 428 | 412 | 413 | 414 | 415 | 416 | 417 | 418 | 419 | 421 | 422 | 423 | 424 | 425 | 426 | 427 | 411 | 429 | 431 | 432 | 433 | 434 | 435 | 436 | 437 | 438 | 439 | 27 |
| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | |

What we are interested in noting now is that with the appropriate equivalence key, we can obtain from the initial base matrix numerical residue any particular rearranged base matrix of numerical residue that interests us.

Thereby, we can lay out endless possibilities for rearranged base matrices. However, even if we encircle the ternary matrices of residues, we have the fabulous amount of 729! (Factorial of 729) possible ordinations out of the 729 residual triples. That is to say, approximately $68 \times 10^{1770}$ *rearranged ternary base matrices of residues.*

Given this huge amount, the number of DES algorithm key is infinitesimal for all practical purposes, as we have previously mentioned above. A very powerful computer was able to discard one table of equivalences per second, and their number is always equal to or greater than the number of rearranged base matrices as discussed in the following section. Thus, it will take more than 2x10$^{1764}$ years to exhaust all possibilities.

**4. Equivalence table**

From the *alphanumeric matrix* (Table 1) and the *rearranged base matrix of numerical residue* (Table 4) that we have selected here as an example, we have built the equivalence table. This is formed by mapping each element of the *alphanumeric matrix* with one or more elements of the *rearranged base matrix of numerical residue.* This coordination can be realized in any manner imagined or agreed to by the partners who want the information transmitted, respecting only one requirement: that there is no element from a rearranged *base matrix of numerical residue* that corresponds to one or more elements from the *alphanumeric matrix.* Naturally, this condition is required so that the resulting cryptogram does not present ambiguities or multiplicities.

While the *conversion table* can be formed in any manner, for cases of building computer programs, it is preferable to perform a connection correspondence using mathematical procedure that generally also presents big versatility. For the purpose of illustration, let's consider the *alphanumeric matrix* shown in Table 1 and the rearranged *base matrix of numerical residue* illustrated in Table 4. Among the many mathematical type mappings that can be performed while respecting the previous requirement is that no element of the base matrix corresponds to more than one alphanumeric matrix. For example, we can construct the following:

We represent the elements of the alphanumeric matrix using the algebraic notation: *Ai, j such that i,j =1,2,...11,* and the elements of the rearranged base matrix using the notation: *Bk,l such that k,l = 1,2,....27.* One of the possible matches that justifies the shading we've done on the matrix in Table 4 for more clarification to the reader, is expressed by the following relationship:

$$A_{i,j} \leftrightarrow B_{i,j}, B_{i,16+j}, B_{16+i,j}, B_{16+i,16+j}$$
$$such\ that\ i,j = 1,2,\cdots,11 \qquad (2.4.1)$$

In this relationship, the symbol <---> should be understood as the expression of the match between the element on your left with the elements on its right. For example, the element $A_{3,8}$ of the alphanumeric matrix (Table 1) that is represented by the letter S, corresponds to the elements $B_{3,8}$, $B_{3,24}$, $B_{19,8}$ y $B_{19,24}$ of the arranged base matrix (Table 4), that is the residual triples 178, 196, 718 and 736.

**5 The reduced cryptogram of residue or template**

As a result of "filtering" the clear text, i.e. the regular alphanumeric character message to be encoded, through the equivalence table, gives a first coding here called *reduced Cryptogram of residue* or simply template. To better define the ideas, let's illustrate with an example of the procedure.

Suppose the transmitter wants to encode the phrase: '*The meeting is on Thursday morning'* into spanish languague *'La reunión es manana Jueves',* and he has chosen as *equivalence table* described in the relationship (2.4.1). Hence, one of the many templates that have associated this phrase according to the chosen option is represented in Table 5.

**Table 5. Template**

| L | a | | r | e | u | n | i | o | n | | e | s | |
|---|---|---|---|---|---|---|---|---|---|---|---|---|---|
| 188 | 314 | 982 | 351 | 318 | 372 | 346 | 358 | 972 | 364 | 976 | 336 | 352 | 451 |
| m | a | ñ | a | n | a | | j | u | e | v | e | s | |
| 345 | 332 | 378 | 844 | 876 | 862 | | 438 | 342 | 389 | 848 | 373 | 866 | 899 |

Below each alphabetic character; we've written one of these corresponding lists according to the chosen relationship (2.4.1).

We note that the template already expressed a powerful cryptogram so as to make use of multiple correspondence without repeating any triple - it can be seen that the below triples of each alphabetic character or own spacing are all different. But as you will see below, the final cryptogram is infinitely more complex and indecipherable that the one provided by the template.

## 6. Protocol key

In the derived template, we are able to complete the last stage of the process leading to the *final cryptogram.* This is achieved consecutively after subjecting each $\mathcal{R}$ residues that form the template to the action of a *coding algorithm.* But in turn, this algorithm acts according to the guidelines imposed by the protocol key. Hence, we will describe in sufficient detail this fundamental process which we herein call *Cryptography of Residues.*

The protocol key, which will have to be agreed upon between the two partners, is given by an arbitrary sequence of *natural numbers* excluding zero. In this exhibition, you will find natural selections separated by a comma and designated as protocol Indices. These, for example, are possible *protocol key sequences:* 3, 12, 5, 2, 5, 6 y 2, 3, 4, 5,10, 61, 3, 9, 22, 35, 5, 4, etc. Likewise, if we choose as protocol key sequence 3, 12, 5, 3, 5, 6 and apply it to the previous Table 5 template, the effect will be as follows: This key is going to require the *coding algorithm* to become the first residue of the template, the 1 in this case is in a sequence of 3 digits because 3 is the protocol index that corresponds to it. The second residue is 8 and as the second protocol index is 12, the encryption algorithm must associate to this residue a sequence of 12 digits. Next comes another residue as 8, but now 5 is the corresponding protocol index, so the encoding algorithm will associate to this residue a sequence of 5 digits. This will continue until the sixth residue with a value of 4, whose encryption algorithm will be associated to a sequence of 6 digits, as 6 is the protocol index that corresponds to it.

Continuing the example, the residue occupying the seventh template in this case has a value of 9 and is part of the situation that through all the indexes that make up the protocol key, and open up a whole series of possibilities for further coding leading to the final cryptogram. For example, this is what we will do then to continue, we can restart the sequence of protocol key as many times as needed to complete the template. However, we can also decide that the key protocol sequence acts cyclically, i.e. according to the order: 3, 12, 5, 3, 5, 6, 12, 5, 3, 5, 6, 3, 5, 3, 5, 6, 3, 12, 3, 5, 6, 3, 12, 5, 5, 6, 3, 12, 5, 3, 6, 3 ,12, 5, 3, 5, etc. There are many inventive possibilities that partners agreed upon. It should be clear that the larger the value of the protocol indices is, the longer the final cryptogram is. However, we must recognize that it may sometimes be desirable to form a high-extension cryptogram. Moreover, as we will discuss later, you can also build massive amounts of cryptograms that represent various texts *all comprising exactly the same number of digits* in their final cryptogram.

## *7. The encryption algorithm*

As stated above, the encoding *algorithm* allows us to associate to each residue $\mathcal{R}$ of the template a sequence consisting of *j* digits, where *j* is precisely the protocol index of the protocol key that we have chosen. The encryption algorithm can be constructed in many different forms. For this exhibition and noting that current computers can hardly operate accurately with integers greater than 15 digits, we decided on the encryption algorithm whose description is set forth below and in which the obstacle of integers with more than 15 digits disappears.This is our algorithm:

For a given protocol *j* index, the program checks whether the specified value is between 1 and 3, both included, or if, by contrast *j* is greater than 3.

If *j* is less than or equal to 3, the program will start generating a random number between 1 and 9, both included. Then, the residue program will associate the natural number of *j* digits given by the expression:

$$\Re + A \times \left(10^{j-1} - 1\right)$$

In the case that the index *j* protocol is equal to or greater than 4, the program will start generating the random number

$$A = INTEGER\ (RANDOM\ ()\ x\ (j\text{-}2) + 1)$$

This number is between 1 and (*j*-2). However, precisely at the position A of all *j* positions that will occupy the j digits comprising the sequence associated to the residue $\mathcal{R}$, the residue $\mathcal{R}$ is to be precisely placed as a digit. Except from the positions (*j*-1) and j, we still have the (*j*-3) positions, all located to the left of the previous two which are the last ones. Hence, for these (*j*-3) positions, the program will randomly generate a natural number between 0 and 9, both included. In the penultimate position, that is, at the ($j$-1) position, the program p digit score resulting from the operation

$$p = \sum_{k=1}^{j-2}(digit\ positions\ k) - 9 \times INTEGER\left[\frac{\sum_{k=1}^{j-2}(digit\ positions\ k)}{9}\right]$$

Finally, in the last position, namely position $j$, the program will log the digit resulting from the operation

$$\Re = \sum_{k=1}^{j-2}(digit\ positions\ k) - p - 9 \times INTEGER\left[\frac{\Re - \sum_{k=1}^{j-2}(digit\ positions\ k)}{9}\right]$$

**8. The final cryptogram**

When applying this previously-discussed *algorithm* consecutively to each and every one of the residues of the *template,* we obtain as a result *the final encryption* of the text that we want to encode. It is this text that the transmitter sent to the recipient via e-mail or through any other means considered appropriate.

By way of illustration, Table 6 shows a final cryptogram that corresponds to the Table 5 template, i.e. the text: *The meeting is on Thursday morning* (originally into spanish: *'La reunión es manana Jueves'*). This cryptogram, consisting of 462 digits, was obtained using the *protocol key* 3, 12, 5, 3, 5, 6 consecutively. We have written in italics on the front of the cryptogram on the first line of this new paragraph because Table 6 shows only one of the final cryptograms out of a total of practically infinite final cryptograms that we can associate to the same sentence and *with the same protocol key* as most of the digits were randomly generated. Naturally, the decoding algorithm discussed below decrypts the message regardless of what the final cryptogram presents. Also, it should be understood that the length of the protocol key depends on the used cryptogram. The bigger the amount of the protocol key indices, the greater the length of the string of digits forming the final cryptogram. That is why, we can build final cryptograms corresponding to different phrases, some longer, some shorter, with the same number of digits as one of the cryptograms associated with any previously chosen text. For example, it is in our power to build many 462-digit cryptograms, like in our example where each one corresponds to a different text. This property is likely to be one that best expresses the power of our *Cryptography of Residues* when compared to any that have been devised so far.

# Tabe 6. A final cryptogram of the expression:

## *The meeting is Thursday morning*

## *(originally into Spanish: 'La reunión es mañana Jueves')*

```
1 8 1 3 2 6 7 4 5 0 4 3 1 8 1 0 8 4 8 6 3 8 3 5 0 6 1 7 5 3 0 8 2 4 0 0 9 2 4 9
8 2 4 5 1 0 8 4 8 7 6 2 4 1 2 7 3 0 5 6 7 5 0 1 6 7 4 1 3 5 4 0 1 1 6 1 3 7 7 4
1 4 2 0 8 6 4 8 3 1 8 4 8 9 7 6 1 0 2 4 2 2 0 3 9 7 8 1 2 3 2 4 8 3 7 2 2 6 3 6
8 1 4 3 5 1 3 8 6 5 1 6 8 8 7 5 0 0 9 6 4 9 1 5 8 8 7 8 7 6 1 1 2 8 0 9 3 3 6 7
1 8 2 6 1 2 7 5 3 4 1 8 9 4 8 7 2 7 2 6 1 1 9 8 6 1 4 5 8 6 3 4 3 7 7 3 8 4 7 1
3 2 6 5 0 3 8 8 7 8 2 3 7 2 5 9 7 3 0 2 4 5 0 9 1 8 4 5 3 7 8 2 4 2 6 2 4 1 8 0
3 1 2 2 4 1 1 5 6 4 4 8 2 3 8 8 1 5 3 9 0 6 0 3 5 7 7 8 3 1 1 2 3 1 8 2 3 9 2 7
7 8 6 3 8 1 7 7 3 8 4 4 8 8 1 2 7 4 0 9 1 4 8 0 5 4 8 0 0 0 7 8 4 8 8 1 2 1 2 6
7 1 8 6 2 7 8 8 3 1 1 6 7 0 5 1 4 1 2 7 4 3 8 8 5 8 8 3 8 6 8 8 8 2 2 4 0 2 8 3
7 2 3 0 5 1 9 8 0 0 2 6 3 9 5 4 3 5 7 5 1 1 2 8 8 9 7 3 5 0 0 9 9 8 2 8 7 4 1 0
8 9 6 5 8 6 0 1 8 1 3 5 6 9 5 7 5 4 3 7 5 0 5 1 8 3 2 7 8 9 8 5 5 8 6 9 8 8 5 6
0 6 8 9 0 3 3 2 9 8 1 9 8 6 8 2 4 0 0 9 4 5
```

*9. Decoding algorithm*

The *final cryptogram* is what the transmitter conveys to the recipient. Naturally, it is assumed that both parties have agreed to the keys used in the transmitting phase, i.e. the *equivalence key* and the *protocol key,* and also, obviously, the *base matrix of numerical residue.* This being admitted, the recipient has to act in the following manner: First, follow the exact same steps previously performed by the transmitter to build the equivalences table. The next act is performed with the help of the *protocol key* by subdividing the final cryptogram into consecutive sequences of digits, each of which has as many digits as required by the corresponding protocol *j* index. To further define the reasoning, Table 7 shows us this subdivision via alternative shading in the final cryptogram shown in Table 6.

## Table 7 - A final cryptogram: The meeting is on Thursday morning

## (originally into Spanish: 'La reunión es mañana Jueves')

```
1 8 1 3 2 6 7 4 5 0 4 3 1 8 1 0 8 4 6 3 6 3 5 0 6 1 7 5 3 0 8 2 4 0 0 9 2 4 9
8 2 4 5 1 0 6 4 8 7 6 2 4 1 2 7 3 0 5 6 7 5 0 1 6 7 4 1 3 5 4 0 1 1 6 1 3 7 7 4
1 4 2 0 6 6 4 8 3 1 8 4 6 9 7 6 1 0 2 4 2 2 0 3 9 7 8 1 2 3 2 4 8 3 7 2 2 6 3 6
8 1 4 3 5 1 3 8 6 5 1 6 8 8 7 5 0 0 9 6 4 9 1 5 8 8 7 8 7 6 1 1 2 8 0 9 3 3 6 7
1 8 2 6 1 2 7 6 3 4 1 8 9 4 6 7 2 7 2 6 1 1 9 8 6 1 4 5 8 6 3 6 3 7 7 3 9 4 7 1
3 2 6 5 0 3 6 6 7 6 2 3 7 2 5 9 7 3 0 2 4 6 0 9 1 8 4 6 3 7 6 2 4 2 6 2 4 1 9 0
3 1 2 2 4 1 1 5 6 4 4 8 2 3 6 6 1 5 3 9 0 6 0 3 6 7 7 6 3 1 1 2 3 1 8 2 3 9 2 7
7 6 6 3 8 1 7 7 3 6 4 4 6 6 1 2 7 4 0 9 1 4 8 0 5 4 6 0 0 0 7 8 4 6 8 1 2 1 2 6
7 1 6 6 2 7 6 6 3 1 1 6 7 0 6 1 4 1 2 7 4 3 6 6 5 6 6 3 8 6 6 6 8 2 2 4 0 2 6 3
7 2 3 0 6 1 9 6 0 0 2 6 3 9 6 4 3 6 7 6 1 1 2 9 8 9 7 3 5 0 0 9 9 9 2 6 7 4 1 0
8 6 6 6 8 6 0 1 6 1 3 6 6 9 5 7 5 4 3 7 5 0 5 1 6 3 2 7 6 6 9 6 6 6 6 6 3 6 5 6
0 6 6 9 0 3 3 2 9 8 1 9 6 6 8 2 4 0 0 9 4 6
```

Each of these sequences of digits forms a natural number that we represent here as *Nj*, where *j* expresses the protocol index, i.e. the number of digits that make up the above natural number. Hence, the recipient shall recover the cryptogram template applying to each of the sequences *Nj* the expression:

$$\Re(N_j) = \sum digit\ of\ N_j - 9 \times INTEGER\left[\frac{\sum digit\ of\ N_j}{9}\right]$$

But we should note that when the result of the previous operation gives 0 to the residue, the program has to replace it with a 9, since this is the residue that corresponds to zero.

A reproduced template is only used as a last act: the recipient "filters" the template through the equivalence table and gets a clear text; the text is written in ordinary alphanumeric characters.

Faced with the finding that the equivalence table is made up of elements for groups of residues n, with n being much greater than the unity producing very long encrypted texts, we demonstrate that n groups with small n, for example, with n = 2, i.e., for binary matrices of residue, we already have 81! = 23x $10^{129}$ rearranged binary residue; with n = 3 such that the number of ternary rearranged base matrices of numerical residue rises to a 729! = 68x$10^{1770}$ and with n = 4, we have matrices of 6561! = 203 x $10^{22194}$ quaternary rearranged base matrices of numerical residue, etc.

Secondly, the choice of a particular binary, ternary, quaternary base, etc... depends only on the partners, and that while they do not say what basis they have chosen and what the used keys are, the hypothetical pirate has no argument, since there are infinite possibilities, enabling him to start any attack with the minimum warranty taken out of some of texts has something to do with the partners have truly been transmitted. This already makes the template or reduced cryptogram of residue in a powerful cryptogram virtually unreadable. We illustrate the last reflection with an example and consider the following cryptogram:

    123456789161654353234439
    367589992414457763212564

We note that this cipher consists of 48 digits and contains no zero. Can one think that this is because of a template or reduced cryptogram of residue? But what was the base matrix used to write it? Binary? Ternary? Quaternary? Sixth order? Eighth order?, It is impossible to answer these questions without prior knowledge, thus it is necessary to ask ourselves what the plain text that can hide the cryptogram is. But, is the former cryptogram a reduced cryptogram of residue or a template? Previously, we have argued that the absence of zeros has led us to assume that it can be a template. But we can prove that the above cryptogram can sometimes be a template and other times it can be a cryptogram; in either case, another observation we have made here regarding the presence of zeros (in the final cryptogram) or its absence (in the template) is a superfluous observation. In fact, the *Residue Theorem* allows us to write templates including the zeros and also removing all the zeros in the final cryptogram. What is more important: *in all cases, the resulting cryptogram continues to contain the clear text to be transmitted it to the partners.*

Finally, with respect to the technical advantage of the inscrutability of the Residue Cryptogram that allows a high level of security in the transmission of information and data, we can show that because of the Aleph-0 double cardinality, the first for the process leading to the template and the second when the protocol key is introduced, the Residue Cryptogram is doubly a Shannon Security Cryptogram (Perfect Secrecy). That is, since the template or reduced cryptogram of residue is a Shannon Security Cryptogram (Perfect Secrecy). Furthermore, we shall justify this ultimate conclusion with an example.

Most of the messages that can be written in a language that uses the Latin alphabet can be done with 26 orthographic characters, 10 numbers, spacing and point. In total, 37 alphanumeric characters. Suppose, then, that to write our message we use the 40-character alphanumeric matrix shown in Table 8.

### Table 8 - Alphanumeric matrix of 40 characters

| 1 | 2 | 3 | 4 | 5 | 6 | 7 | 8 | 9 | 0 | 1 |
|---|---|---|---|---|---|---|---|---|---|---|
| A | B | C | D | E | F | G | H | I | J | 2 |
| K | L | M | N | O | P | Q | R | S | T | 3 |
| U | V | W | X | Y | Z |   |   |   |   | 4 |
| 1 | 2 | 3 | 4 | 5 | 6 | 7 | 8 | 9 | 10 |   |

As in previous cases, the last column and last row serve to locate the position of each element in the matrix, and it should be noted that three of the elements of the matrix correspond to the spacing, namely the elements 47, 48 and 49 (the first digit expresses the row and the second one represents the column).

Now consider that we have sent to our partner the 48-digit cryptogram that we have written above. What is the plain text that we transmitted with this cryptogram if we also affirm that it is a reduced cryptogram or template? It is impossible to know if we do not give additional information which has been specifically the equivalence table that we used. In fact, if we use a equivalence table made from the binary base matrix of the numerical residues of the Table 2, we will have to choose one from among the $81! = 23 \times 10^{129}$ possibilities of *rearranged binary base matrixs of numerical residue.* In this case, we chose the number of elements in this matrix for each element of the 40-character alphanumeric matrix which is 2 and we spare one. What if the equivalence table has been made from the quaternary base matrix of numerical residue of the Table 3?.In this case, we will have to choose one among the $729! = 68 \times 10^{1770}$ possibilities of rearranged ternary base matrices of numerical residues. In this case, we chose the number of elements in this matrix for each element of the 40-character alphanumeric matrix which is 18 and we spare 9. If the equivalence table has been formed out of the Quaternary base matrix of numerical residue?. In this case, we will have to choose one from among $6561! = 203 \times 10^{22194}$ possibilities of quaternary rearranged base matrix of numerical residue. In this case, we chose the number of elements in this matrix for each element of the 40-character alphanumeric matrix which is 164 and we spare one. We do not continue anymore. This means that any of the phrases that we can then read, among a wealth of texts that we could continue to add, is slated to be the plain that we really wanted to transmit:

**Example.1. Phrases for binary base matrix of numerical residue (24 characters)**

FUMATE EL PURO CON PAQUI CUI  PRODEST SCELUS MARIA
ES MES UTIL CRIPTOGRAPHY  JUST ESTA CAMINO DE LUGO
FELISA Y SU MULO JOSEFIN  IRAN HOMBRES MUY HABILES
TOMASO DE FORMENT NI GRA  COMPRE LA FINCA DE RUBIO
GAT DE VINT UNGLES QUICO  BARCELONA 32 SPORTING 19
QUI SAP QUAN SORTIRE MUT  ...

**Example.2. Phrases for ternary base matrix of numerical residue (16 characters)**

MANANA NOS VEMOS

ME DUELE LA MANO THEORY OF MATTER

ETS UN HOME FORT THE OTHER PAPERS

VIGILA SUS ACTOS LES PLUS SIMPLES

ENS VEGEM DIJOUS DANS CE CHAPITRE

CON DON FABRIZIO ETCETERA ES ETO

PESA 16000 KILOS ...

**EXAMPLE.3. Phrases of quaternary base matrix of numerical residue (12 characters.)**

BEUREM AIGUA IS A DENSITY

VINE A LES 6 IS INVARIANT

DONARE EUROS DI LAMPEDUSA

TOMALA GUAPA ANGELICA MIA

PONTE COMODO UNE EQUATION

NOS CALLAMOS

THE UNIVERSE

What is the phrase we have decided to transmit? It is impossible to know it if we do not add additional information to what has been the practical equivalence table that we used.

From here, we can make use of the double Shannon Security Cryptogram (Perfect Secrecy), applying the protocol key to the template that launches the encryption algorithm to obtain what we have called *final residue Cryptogram.* Obviously, this means that we can transform the previous template to infinite final cryptograms, all containing the same plaintext.

***Best mode of the invention***

In conclusion, for the best embodiment of the present invention, the following elements or technical means must be employed in successive sequential order: *1st. A alphanumeric matrix, 2nd. a base matrix of numerical residue, 3rd. an equivalence key, 4th. an equivalence table, 5th. a reduced cryptogram of residue or template, 6th. cradle of protocol key, 7th. an encryption algorithm, 8th. final residue cryptogram and 9th. decoding algorithm.*

Also, you can get to the practice of a simplifying and suppressing second realization mode that consists of the stages of, an equivalence key and a less operational and more vulnerable equivalence table, while maintaining the compliance with the Shannon budgets, via the following sequential and progressive order: *1st. An alphanumeric matrix, 2nd. a base matrix of numerical residue, 3rd. a reduced residue cryptogram or template, 4th. one protocol key, 5th. an encoding algorithm, 6th. final residue cryptogram and 7th. a decoding algorithm.*

**Claims**

1. Procedure of double symmetrical Shannon Security Cryptogram (Perfect Secrecy) for the codification of information and reliable electronic and telematic transmission, that is fast and safe for industrial application in the private and public sectors of telecommunications, computer science, national defense, computer software, electronic payment and banking transactions, cryptography of musical and audiovisual works and digital signatures and certificates characterized because it comprises the following elements or technical means in sequential and successive order: 1st. An alphanumeric matrix, 2nd. a base matrix of numerical residue, 3rd. an equivalence key, 4th. an equivalence table, 5th. a reduced residue cryptogram or template, 6th. a protocol key, 7th. an encryption algorithm, 8th. a final residue cryptogram and 9th. a decoding algorithm.

2. Procedure of double symmetrical Shannon Security Cryptogram (Perfect Secrecy) for codification of information for reliable telematic and electronic transmission, that is fast and safe for industrial application in the private and public sectors of telecommunications, computer science, national defense, computer software, electronic payment and banking transactions, cryptography of musical and audiovisual works and digital signatures and certifications simplified according to claim.1 **characterized in that** they deleted the following elements or media in the sequential order, 3rd. an equivalence key and 4th. an equivalence table.

TRANSMITTER                    RECIPIENT

| INTERNATIONAL SEARCH REPORT | International application No. |
| --- | --- |
| | PCT/ES2011/070331 |

**A. CLASSIFICATION OF SUBJECT MATTER**

*H04L9/06* (2006.01)

According to International Patent Classification (IPC) or to both national classification and IPC

**B. FIELDS SEARCHED**

Minimum documentation searched (classification system followed by classification symbols)
H04L

Documentation searched other than minimum documentation to the extent that such documents are included in the fields searched

Electronic data base consulted during the international search (name of data base and, where practicable, search terms used)

EPODOC, INVENES, WPI, XPMISC, XPI3E, XPIETF, XPIEE, XPESP, NPL, COMPDX

**C. DOCUMENTS CONSIDERED TO BE RELEVANT**

| Category* | Citation of document, with indication, where appropriate, of the relevant passages | Relevant to claim No. |
| --- | --- | --- |
| A | WO 2008076861 A2 (QUALCOMM INC; GANTMAN ALEXANDER; ROSE GREGORY GORDON; CHOI JAE-HEE ; NOERENBERG JOHN W II ) 26-06-2008, | 1-2 |
| A | US 2007064933 A1 (LUCENT TECHNOLOGIES INC) 22-03-2007, | 1 |
| A | 01-01-1997, Highland H J, "Data Encryption: A Non-Mathematical Approach" COMPUTERS & SECURITY, ELSEVIER SCIENCE PUBLISHERS, I, Vol. 16, Nr: 5, Págs: 369 - 386 ISSN 0167-4048, doi:10.1016/S0167-4048(97)82243-2 | 1 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
| --- | --- |
| 02/02/2012 | **(07/02/2012)** |

| Name and mailing address of the ISA/ | Authorized officer |
| --- | --- |
| | M. Muñoz Sanchez |
| OFICINA ESPAÑOLA DE PATENTES Y MARCAS | |
| Paseo de la Castellana, 75 - 28071 Madrid (España) | |
| Facsimile No.: 91 349 53 04 | Telephone No. 91 3495349 |

Form PCT/ISA/210 (second sheet) (July 2009)

## INTERNATIONAL SEARCH REPORT

Information on patent family members

| International application No. |
|---|
| PCT/ES2011/070331 |

| Patent document cited in the search report | Publication date | Patent family member(s) | Publication date |
|---|---|---|---|
| WO2008076861 A | 26.06.2008 | TW200840263 A | 01.10.2008 |
| | | EP2100405 A | 16.09.2009 |
| | | EP20070869269 | 14.12.2007 |
| | | KR20090100399 A | 23.09.2009 |
| | | CN101558598 A | 14.10.2009 |
| | | US2010034385 A | 11.02.2010 |
| | | JP2010515083 A | 06.05.2010 |
| US2007064933 A | 22.03.2007 | US7801307 B | 21.09.2010 |
| | | WO2007120169 A | 25.10.2007 |
| | | KR20080031906 A | 11.04.2008 |
| | | EP1927212 A | 04.06.2008 |
| | | EP20060851115 | 17.07.2006 |
| | | JP2009503580 A | 29.01.2009 |
| | | CN101461173 A | 17.06.2009 |

Form PCT/ISA/210 (patent family annex) (July 2009)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005212788 B

- FR 2884995

**Non-patent literature cited in the description**

- **SHANNON CE.** A Mathematical Theory Communication. *The Bell System Technical Journal,* July 1948, vol. 27, 379-423623-656
- **C, E. SHANNON.** Communication Theory of Secrecy Systems. *The Bell System Technical Journal,* 1949, vol. 28-4, 656-715
- IEEE Transactions on Information Theory. Whitfield DIFFIE and Martin HELLMAN: New Directions in Cryptography, 1976, vol. 22, 644-654
- **MANUEL JOSÉ LUCENA LOPEZ.** *Criptografía y seguridad en computadores,* 08 March 2009, Jan. 41
- **HORST FEISTEL.** Article Cryptography and Computer Privacy. Scientific American, 1973, vol. 228

- **X. LAI ; J. L. MASSEY ; S. MURPHY.** Markov ciphers and differential cryptanalysis, Advances in Cryptology - Eurocrypt '91. Springer-Verlag, 1992, 17-38
- **MANUEL JOSÉ LUCENA LOPEZ.** *Criptografía y seguridad en computadores,* 08 March 2009, 150
- **JOAN DAEMEN ; VINCENT RIJMEN.** The Design of Rijndael: AES - The Advanced Encryption Standard. Springer-Verlag, 2002
- **MANUEL JOSÉ LUCENA LOPEZ.** *Criptografía y seguridad en computadores,* 08 March 2009, 167